# EUROPEAN PATENT APPLICATION

(11) **EP 2 148 287 A1**
(43) Date of publication of application: **27.01.2010**
(21) Application number: 08305415.5
(22) Date of filing: 23.07.2008
(51) Int. Cl.: G06F 21/20

(54) **Method for securing an operation, corresponding token and system**

(71) Applicant: GEMPLUS, 13420 Gémenos (FR)
(72) Inventor: Botuha, Stéphane, 83140, Six Fours les plages (FR); Bordron, Damien, 83860, NANS LES PINS (FR); Poujol, Stéphane, 13600, LA CIOTAT (FR)

(57) **Abstract**

The invention relates to a method 30 for securing an operation. The method comprises a displaying step in which a terminal displays 38 a message for entering data, a first comparing step in which a token compares 318 entered data with secret data.

According to the invention, the method further comprises a marking step by which the token associates a first sequence mark with data for displaying the message for entering data; a cooperating step in which the token sends 36 to the terminal the data for displaying the message for entering data accompanied with the first sequence mark, the terminal sends 312 to the token entered data accompanied with a second sequence mark, a second comparing step, the token compares 314 the second sequence mark with the first sequence mark, and, according to comparison results, the token authorizes 320 or forbids 316 to carry out the operation.

The invention relates also to corresponding token and system.

## Description

### Field of the invention:

The invention relates, in a general manner, to a method for securing an operation.

Moreover, the invention relates to a token for securing an operation.

Within the present description, a token is any portable smart object that is not autonomous in power and intended to cooperate with a host device.

Finally, the invention relates to a system for securing an operation.

### State of the art:

As known per se, a smart card of the type Subscriber Identity Module (or SIM), as token, supports at least one application that requests an authentication before processing an operation, such as an access to personal data stored within the SIM card. The SIM card cooperates with a host terminal, like a mobile phone.

To authenticate, secret data has to be entered, possibly through a phone man machine interface, like data relating to a Personal Identification Number (or PIN) that is displayed on the phone display screen.

However, such a known solution has a major disadvantage.

As a matter of fact, a robber that steals the phone, after a successful authentication, can benefit from the corresponding authentication, in order to process another operation also displayed on the phone display screen. To benefit from the corresponding authentication, the robber, thanks to the phone browser, re-plays the previous authentication by browsing through the different operations displayed on the phone display screen until the authentication operation (as the one already validated).

### Summary of the invention:

The invention eliminates such a major disadvantage by providing a method for securing an operation. The method comprises a displaying step in which a terminal displays a message for entering data, a first comparing step in which a token compares entered data with secret data.

According to the invention, the method further comprises a marking step by which the token associates a first sequence mark with data for displaying the message for entering data; a cooperating step in which the token sends to the terminal the data for displaying the message for entering data accompanied with the first sequence mark, the terminal sends to the token entered data accompanied with a second sequence mark, a second comparing step, the token compares the second sequence mark with the first sequence mark, and according to comparison results, the token authorizes or forbids to carry out the operation.

The principle of the invention consists in that a token adds, within a message conveying data to be displayed for entering data, a unique item of information that is to be linked to data relating to secret data to be entered, in order to identify a precise and univocal correspondence between the secret data and the added item of information.

Accordingly, when the added item of information is not retrieved within the message conveying data entered as secret data and/or when the data entered as secret data does not match with the secret data, then the token does not allow any further operation within a concerned application.

Conversely, when, firstly, the added item of information is retrieved within message conveying data entered as secret data, and secondly, the data entered as secret data matches with the secret data, then the token allows to perform the operation of a concerned application.

In other words, secret data is uniquely identified by the token thanks to a sequence mark paired with the secret data. The corresponding paired sequence mark allows to authenticate only once the play of the secret data.

The secret data is known at least to the token. Furthermore, the secret data can be known to the user and/or another entity, such as a server.

The application integrating the operation can be further executed to provide a user with a corresponding service offered either by the sole token or via the token in cooperation with the terminal and/or another entity.

As another entity, it can be a server provided that there is an existing communication channel that can be used from the token to the server.

The proposed solution allows to protect the thus concerned operation against any attack like a re-play of the secret data.

Such a protection of the operation is automatically performed thanks to the pairing of a sequence mark to the secret data to be entered.

The proposed solution is convenient for the user and therefore user-friendly.

Preferentially, the invention method is used within an application comprising at least one operation requiring a previous user authentication.

According to a further aspect, the invention is a token for securing an operation. The token is intended to cooperate with at least one external entity. The token comprises means for comparing entered data with secret data.

According to the invention, the token comprises means for associating a first sequence mark with data for displaying a message for entering data; means for sending to outside the data for displaying the message for entering data accompanied with the first sequence mark; means for receiving entered data accompanied with a second sequence mark; means for comparing the second sequence mark with the first sequence mark; and means for authorizing or forbidding, according to comparison results, to carry out the operation.

According to a further aspect, the invention is a system for securing an operation. The system comprises a terminal and a token coupled with the terminal. The terminal comprises a display screen for displaying a message for entering data. The token comprises means for comparing entered data with secret data.

According to the invention, the token comprises means for associating a first sequence mark with data for displaying the message for entering data; means for sending to the terminal the data for displaying the message for entering data accompanied with the first sequence mark, the terminal comprises means for sending to the token entered data accompanied with a second sequence mark, and the token comprises means for comparing the second sequence mark with the first sequence mark, and means for authorizing or forbidding, according to comparison results, to carry out the operation.

### Brief description of the drawings:

Additional features and advantages of the invention will be more clearly understandable after reading a detailed description of one preferred embodiment of the invention, given as an indicative and non-limitative example, in conjunction with the following drawings:
- Figure 1 illustrates a simplified diagram of an embodiment of an electronic system comprising a mobile phone and a smart card coupled to the mobile phone, the system being adapted to secure an operation of an application embedded within the smart card according to the invention;
- Figure 2 represents a simplified diagram of an embodiment of the smart card of figure 1, as token, to be connected to the mobile phone, as terminal, of figure 1;
- Figure 3 illustrates a flow chart of an exemplifying method for securing an operation with the help of the smart card of figure 2; and
- Figure 4 is one example of a message flow between an electronic payment server, the mobile phone, and the smart card, as the different entities implementing the method of figure 3.

### Detailed description of one embodiment:

Herein under is considered a case in which the invention method for securing an operation is implemented by the SIM type smart card, as token, in cooperation with a mobile phone, as terminal.

However, it is only for exemplifying purposes and is not considered to reduce the scope of the present invention.

For example, instead of being constituted by a SIM type smart card, the token can be constituted by a dongle of the USB (acronym for "Universal Serial Bus") type (that does not need any specific reader within a host computer), a smart card, a MMC (acronym for "MultiMediaCard") card, a SD (acronym for "Secure Digital") Card, and/or any other electronic medium that may have different form factors. According to still other examples, the token can also be a chip fixed, possibly in a removable manner, to a host device, or a chip to be soldered within a host device.

Likewise, instead of being constituted by a mobile phone, the terminal can be constituted, for example, by a set-up box, a desktop computer, a laptop computer, a media-player, a game console, a handset and/or a Personal Digital Assistant (or PDA).

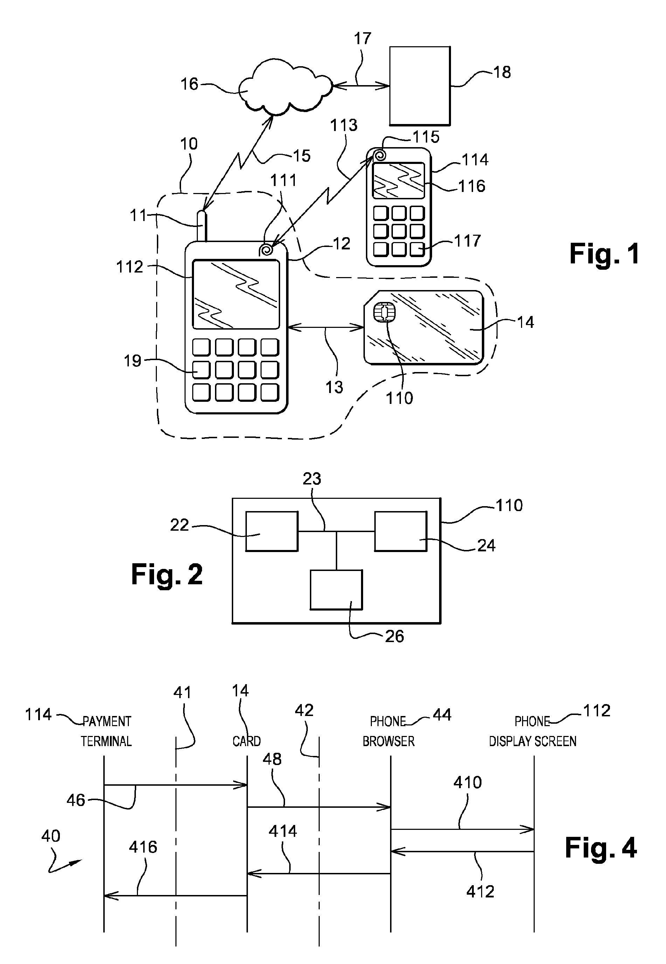

Figure 1 shows an electronic system 10 that can be connected to a mobile network server 18 and/or to an electronic payment terminal 114.

The system 10 comprises a mobile telephone 12, as a user device, and a SIM type smart card 14 that is coupled to the mobile telephone 12 in order to cooperate with each other.

For simplicity, the mobile telephone 12 and the SIM type smart card 14 are termed hereinafter respectively the phone 12 and the card 14.

The phone 12 includes, as data processing means, at least one microprocessor, volatile and non-volatile memories, at least three Input/Output (or I/O) interfaces linked together through a data and control bus (not shown).

The microprocessor processes and controls data within the phone 12 and/or data to be exchanged with outside of the phone 12. The microprocessor controls and communicates with all the components of the phone 12, such as the I/O interfaces.

The memories store data relating to an Operating System and applications, among which there is a browser that allows a user to navigate between different displayed messages, for example through HyperText Markup Language (or HTML) pages.

Each HTML page relates to one operation displayed further to a message originating from outside the phone 12, namely the card 14, the mobile network server 18 or the electronic payment terminal 114.

The I/O interfaces comprise a contact interface (not represented) of the type ISO (acronym for « International Standard Organization ») 7816, as one I/O interface, to interact with the card 14. The contact interface is intended to let communicate, through a bi-directional link 13, with the card 14. The contact interface contains one contact pad used for implementing a Single Wire Protocol (or SWP), that allows to communicate with the card 14.

The phone 12 is adapted to communicate data with the card 14 by using Application Protocol Data Unit (or APDU).

The phone 12 has a first antenna 11, as another I/O interface, to communicate, over the air (or OTA), via a long range radiofrequency bi-directional link 15, through a cellular telecommunication network 16, with the mobile network server 18.

The cellular telecommunication network 16 is connected, for example, through a cable, via a bi-directional link 17, to the mobile network server 18. The cellular telecommunication network 16 is adapted to implement a 2G (acronym for a second generation network, i.e. GSM for "Global System for Mobile communications"), 3G (acronym for a third generation network, i.e. UMTS for "Universal Mobile Telephone System") and/or CDMA (acronym for a "Code Division Multiple Access") mode(s).

The phone 12 has preferably the capacity to communicate with the mobile network server 18.

The mobile network server 18 is integrated within an entity of a system that can be constituted by the system usually known as a back-end OTA system. The mobile network server 18 is directly or indirectly controlled by a telecommunication operator.

The phone 12 has a second antenna 111, as still another I/O interface, to communicate, through a short range radiofrequency bi-directional link 113, i.e. up to a distance about 20 centimeters, with the electronic payment terminal 114. The second antenna 111 is used for implementing a contactless technology like a ISO 14 443 and/or a Near Field Communication (or NFC) technology(ies), as known per se.

The electronic payment terminal 114 is adapted to perform an electronic payment transaction with a user that owns electronic payment means, such as the card 14, as a medium for the chip 110.

The electronic payment terminal 114 comprises an antenna 115, in order to communicate, through a short range radiofrequency bi-directional link 113, with the phone 12.

Preferably, the electronic payment terminal 114 is equipped with a display screen 116 and a keyboard 117. The keyboard 117 is used to enter an amount value of a product or a service to sell. The display screen 116 is used to display the amount value relating to a payment to be performed for a product or a service to sell.

Such an amount value is captured either through the keyboard 117 or other means, like an infra-red reader (not shown) equipping or being connected to the electronic payment terminal 114. The amount value can be indicated through an electronic tag, like a bar code, to be read through an infra-red reader.

The electronic payment terminal 114 is connected to a server (not represented) operated by a bank operator or on its behalf (such as through another bank operator or a trade partner). Such a server manages a bank account relating to a user of the electronic payment terminal 114. In particular, this server registers a credit operation on the bank account of the user further to a debit operation originating from a bank account of an owner of the card 14 that is been validated.

To interact with the user from and/or through the card 14, the phone 12 has the capacity to implement a SIM Tool Kit (or STK) mechanism by which the card 14 acts as a master while the phone 12 acts as a slave.

Thus, the phone 12 is adapted to interpret any proactive command originating from the card 14 involving a user operation, such as "Display text", "Set-up menu", "Select menu", "Get-inkey", and/or "Get-input".

The phone microprocessor is also configured to send back, once a displayed application has been selected among the displayed one(s), to the card 14 another command for launching an execution by the card 14 of a selected application with possible multiple selectable choice(s) and/or data entered by the user.

The user can enter data, such as a PIN, through a phone man machine interface comprising a keyboard 19 and a display screen 112.

The card 14 is inserted within the phone 12.

The card 14 includes a chip 110 that is further described in details in relation with the figure 2.

The chip 110 communicates with the phone 12, via the bi-directional link 13, through a contact interface of the type ISO 7816.

According to a preferred embodiment, the contact interface contains one contact pad used for implementing the SWP, to communicate with the phone 12 for accessing one or several applications integrated within a server (also termed Smart Card Web server or SCWS).

To interact with the user, these applications are accessible via a web browser embedded within the card 14 or at a remote location (such as an external server connected to the phone 12 and possibly managed by a phone operator), or a mobile application stored and run by the phone 12 (or termed midlet when it is a Java application).

According to a variant, instead of being integrated within a card server, the payment application is accessible, through the phone 12, via a STK menu,.

Among the applications, there is a payment application supported by the chip 110 that operates in cooperation, through the contact pad reserved for SWP and the second antenna 111 of the phone 12, with the electronic payment terminal 114.

According to an alternative, instead of accessing the payment application through the contact pad reserved for SWP, the payment application is accessed via the ISO 7816 contact interface.

According to a variant, instead of the contact pad reserved for SWP used for communicating through the second antenna 111 of the phone 12 with the electronic payment terminal 114, as a corresponding targeted interlocutor, the card 14 is itself provided with an antenna (not represented).

The payment application reads an amount value of the product (or service) to be sold that is entered via the keyboard 117 of the electronic payment terminal 114, by sending to the electronic payment terminal 114 a request for retrieving the amount value and receiving from the electronic payment terminal 114 a corresponding response.

According to another embodiment, instead of the contact interface, the card 14 and the phone 12 are coupled to each other, through a short range radiofrequency link, as contactless interface, such as a Bluetooth (registered trademark) or a Wifi (registered trademark) link.

The chip 110 allows to identify a carrier (or termed subscriber) of the card 14 before the mobile network server 18 and before the electronic payment terminal 114, in order to be allowed to access some service(s) that an operator, or on its behalf (possibly through another operator or a trade partner), proposes through the electronic payment terminal 114 and/or the mobile network server 18. Each service is associated with a corresponding application stored within the card 14 at least in part.

As to an application selected by the user through the phone man machine interface, it can constitute any application embedded solely within the card 14. The selected application may have been previously either loaded during a manufacturing process of the card 14 including its personalization process or downloaded from the mobile network server 18 to the card 14 that stores it.

The selected application can be an action, like a function, that does not require any user interaction while being displayed via the display screen 112 to inform the user about the progress of the action. Such a function can be an authentication function and/or an electronic signature function that uses data stored within the chip 110.

The selected application can encompass a payment, a transaction, a loyalty, an access to another application and/or data stored within the card 14 and/or the phone 12, a bet, and/or a survey, as one or several operations.

Preferably, the operation to be executed requires, as one preliminary condition, a user authentication that prompts the user to submit secret data, namely her or his PIN, to be checked by the card 14 that stores it.

When entering data, a star or any other character can be displayed for each entered character, in order to render the entered character non-visible in clear at the phone display screen.

According to a variant, the operation to be executed requires, as one preliminary condition, an authentication that requests a machine, like the mobile network server 18, to submit secret data, to be checked by the card 14 that stores it.

According to one interesting feature of the invention, the PIN, as secret data, is uniquely authenticated each time it has to be submitted while pairing it, through the card 14, with a unique sequence mark to be also retrieved by the card 14 that knows it.

Preferably, the sequence mark consists of a previously generated random number or termed random for simplicity.

According to other embodiments, the sequence mark can be a predefined counter value and/or a predetermined sequence of data.

Preferably, the card 14 generates a new random number for each message to be displayed for prompting the user to enter her or his PIN.

Besides the PIN, the card 14 has also to retrieve the random within a message accompanying input data entered as PIN that the card 14 receives from the phone 12, so as to allow an execution of an operation following a user authentication.

The random linked to the PIN allows to protect a further operation notably against a replay attack of a user authentication that has been previously validated by the card 14, i.e. the data entered by the user is the PIN.

Consequently, a robber of the phone 12, once an operation requiring a previous user authentication has been successfully played, is prevented to replay the previous successful user authentication for another operation, on her or his own account.

Thus, there is no need to use a time stamp associated with the concerned operation that allows to date a request of an execution of the operation. Furthermore, there is no need to use an identifier for a (play) session of the considered application.

To interact with the user, the chip 110 of the card 14 can be configured to use a command, such as a proactive command, to be transmitted to the phone 12, to propose, on the card own authority, through the phone display screen 112, a list of application(s) supported at least in part by the card 14. The command is preferably accompanied with the list of application(s) to be displayed.

The list of application(s) is displayed through the display screen 112. The list of application(s) contains an electronic payment application involving a communication with the electronic payment terminal 114.

For each application, one or several items can be proposed and selected by the user in accordance with her or his choice(s) to be given through the phone man machine interface.

Furthermore, the user can enter data for some selected application, to indicate her or his chosen personal data, in order to personalize the selected application to be executed.

Thus, an access to an application or applications supported by the card 14 is possible, through a pop-up window displayed upon the phone display screen 112 to propose, via a menu, an interaction with the user.

The user interacts with the man machine interface to select an application, amongst the one(s) displayed through the menu, possibly by informing and/or choosing some proposed item(s) and/or through one or several sub-menus.

The card 14 is able to receive another command originating from the phone 12 and for triggering an execution of another application relating to one selected service among the one(s) that has(have) been displayed with the user personal data and/or choice(s).

The card 14 may involve the mobile network server 18 and/or the electronic payment terminal 114 at least in part to completely execute the corresponding selected application. To involve the mobile network server 18, the card 14 sends it, through the phone 12, a request allowing the mobile network server 18 to further execute the selected application.

The user can easily access an application from and/or through the card 14.

Besides the card 14, a part of the application to be executed is lodged within the back-end OTA system. The mobile network server 18 can also be involved to execute the selected application.

The selected application is stored and executed by the card 14.

Hereinafter, since the card 14 comprises an electronic payment application, the card 14 is assumed to act as a debit payment card with respect to the electronic payment terminal 114. The user has to move the phone 12 near to the electronic payment terminal 114, so as to be able to let communicate the card 14 with it through the phone antenna 111.

It is assumed that the phone 12 displayed one HTML page for presenting one message for prompting the user to enter her or his PIN, such as "please enter your PIN" and another HTML page for presenting one message for informing the user about a payment transaction, such as "Pay".

Figure 2 schematically shows components incorporated within the chip 110 of the card 14 intended to interact with the phone 12, as host terminal, used by a user to perform an electronic payment transaction before the electronic payment terminal 114.

The chip 110 comprises, as data processing means, one microprocessor 22, volatile and non volatile memories 24 and at least one I/O interface 26 linked together through a data and control internal bus 23.

The I/O interface 26 is used to exchange data with outside of the card 14, namely at least the phone 12 and the electronic payment terminal 114.

The microprocessor 22 executes notably any application stored within card memories, and in particular the electronic payment application.

The microprocessor 22 controls and communicates with all the components of the card 14, such as the memories to read them and possibly write into them.

The memories 24 store data, in particular data relating to an Operating System and SIM Toolkit applications and data relating to a phone book, contacts, emails and/or a personal organizer.

The memories can be constituted by one or several EEPROM (acronym for "Electrically Erasable Programmable Read-Only Memory"), one or several ROM (acronym for "Read Only Memory"), one or several Flash memories, and/or any other memories of different types, like one or several RAM (acronym for "Random Access Memory").

The memories 24 store data relating to the electronic payment application that is actuated by data originating from outside the card 14, through the I/O interface 26, for example, originating, via the phone 12, from the electronic payment terminal 114.

The application then processes the data by exchanging data with the phone 12, in order to interact with the phone 12 and its user to enter the PIN.

The memories 24 also store data relating to at least one event-status is to be surveyed by the card 14. The event-status can be the time. The event-status is used to trigger a check by the card 14 whether a service is available.

The chip 110 is configured so as to generate a random for requesting a user to enter data, as PIN, associate the random to the request, and verify that the random is also contained with the message accompanying the PIN, as response to the request originating from the phone 12, by triggering either an authorization or a forbidding of a payment transaction, as an operation.

The chip 110 is therefore adapted to check whether a random transmitted with a request for PIN is synchronized with a random that is transmitted with a corresponding response accompanying the PIN.

The memories 24 preferably comprise credentials, such as a PIN and/or keys, among which an encrypting key, a decrypting key, and the random to be associated to the PIN. The credentials can be used to authenticate the user (before the mobile network server 116) and/or sign data to be sent to outside world (like the mobile network server 116), possibly by using data that is received from outside. The credentials can be used to sign data originating from one or several operations interaction with the user through the man machine interface of the host device.

The memories 24 store at least one application providing at least one security function, a digital signature, a user identification, a user authentication, an on-board key generation, and/or a secure exchange for online transactions.

The card 14 allows to obtain a portable electronic medium that is user-friendly.

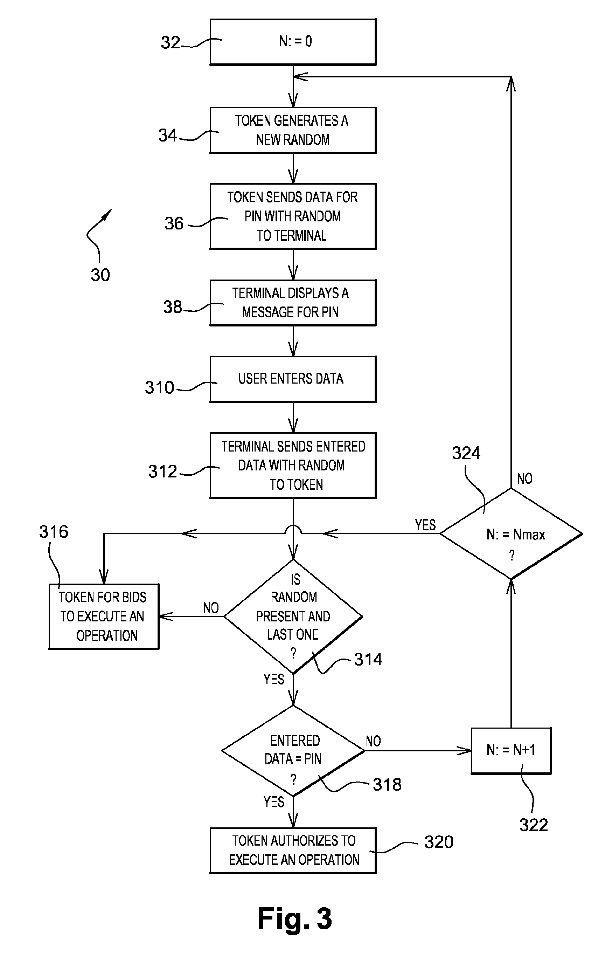

Figure 3 depicts an example of a sequence 30 of steps that is implemented to secure an operation, like an electronic payment transaction, as a service offered from the card 14, as token.

It is assumed that the payment transaction requires a user authentication by using a PIN, as secret data, known to the sole user and the card 14.

The payment transaction is to be validated by the card before going further.

Firstly, a ratification counter relating to a count of attempts for giving the right PIN is initialized 32 to zero.

Then, the card 14 generates 34 a new random, as a sequence mark.

According to another embodiment, the card 14 stores a random that has been loaded either during a download from an OTA server of the electronic payment transaction or at a manufacturing of the card during its personalization process.

The random is to be associated with data relating to a message for entering data that is displayed through the display screen of the phone, as terminal.

Such a random is to be used only once, namely for a cooperation phase involving the phone and the card for a request for PIN and its associated response. More exactly, on the one hand, the random is conveyed with data to be transmitted from the card to the phone for requesting the PIN, and on the other hand, the random has to be conveyed with data received by the card and originating from the phone, as the response containing a user attempt to enter her or his PIN.

The card sends 36 to the phone data for displaying the message for entering data accompanied with the random, as the last one generated.

According to an advantageous embodiment, the random is not intended to appear through the corresponding displayed page, and is contained within a hidden part of the displayed page. Thus, a user or any other person like a potential robber is not aware of the presence of the random.

The random can be encrypted by the card by using an encrypting algorithm like a Data Encryption Standard (or DES) or a triple DES.

The phone displays 38 the message for entering data like "Please enter your PIN" while displaying also two buttons like "OK" and "CANCEL", in order that the user either validates her or his entered data, as PIN, or cancels the user authentication, and therefore the requested payment transaction.

The user enters 310 data as her or his PIN, and validates the data she or he has just entered.

The phone sends 312 back the entered data with the random originating from the corresponding request for PIN.

Then, the card verifies whether three conditions are satisfied in order to allow or not the payment transaction.

More exactly, the card analyses 314 whether a random is present within the received response originating from the phone, and if so, i.e. when a random is present, the card analyses whether the received random is the last generated one, i.e. at the last preceding random generation step 34.

If no random is present, then the card forbids 316 to execute any further operation, including a new payment transaction. The card can then send a message for informing it about a card non-authorization, possibly through the phone, to an external entity, so as to stop to execute the application.

If a random is present within the response transmitted from the phone and the random does not match with the random generated during the last random generation step, for example when the random is the one associated with the last executed payment transaction, then the card forbids 316 to execute any further operation, including a new payment transaction.

If a random is present within the response transmitted from the phone and the random does match with the random generated during the last random generation step, then the card analyses 318 whether the entered data matches with the expected PIN, that the card stores possibly in an encrypted manner to keep it secret (in such a case, the card executes a decryption of the encrypted PIN before comparing it to the entered data).

If the answer is yes, i.e. when the entered data corresponds with the expected PIN, then the card authorizes 320 to execute a new payment transaction.

The card invalidates the random that has to be used only once, for example by generating a new random while repeating all the aforementioned steps. The card can then send a message for informing about a card authorization, possibly through the phone, to the electronic payment terminal, as an external entity, in order to continue to execute the application. The message comprises among others a bank account identifier, the value of amount of the transaction to be performed by the receiver bank operator.

If the answer is no, i.e. when the entered data does not correspond, then the card increments 22 the ratification counter value with one unity.

Then, the card analyses 324 whether the ratification counter value has reached a predefined maximum value, such as the value "three".

If the ratification counter value is equal to the maximum value, then the card forbids 316 to go further by denying to carry out the new payment transaction, while possibly sending a message to the electronic payment terminal 114.

On the contrary, i.e. if the ratification counter value is inferior to the maximum value, then the card generates 34 another random to be associated with a new user attempt.

Figure 4 depicts a message flow 40 between the electronic payment terminal 114, the phone 12, and the card 14, as the different entities implementing the method.

A first vertical dotted line 41 separates the electronic payment terminal 114 on the left side from the system comprising the card and the phone on the right side.

On the right side of the first vertical dotted line 41, a second vertical dotted line 42 separates, within the system, the card 14 on the left side and the phone on the right side.

More exactly, within the phone side, there are a phone browser 44 and the phone display screen 112 that are involved.

Firstly, the electronic payment terminal 114 sends, through the phone 12 (in a transparent manner, i.e. without any processing within the phone 12 apart from a forwarding of the received information to the card), to the card 14 a message 46 that requests to pay an amount that is specified within the conveyed data.

Once the card 14 receives the message, the card 14 actuates a payment application foreseen within a SCWS, or termed servlet.

The card servlet allows to add dynamic content to the web server using a Java platform. The content is generated and added by the servlet in HTML. The HTML is used to interact between the SCWS, as web server, and the user.

The servlet generates a form to be displayed, via a HTML page, encompassing a random generated by the card, as a sequence mark.

For example, the form can be programmed as follows:
<form method="post" action="myServlet">
<input type="password" name="pin" maxlength="20" value="">
<input type="hidden" name="rnd" value="XYZ">
<input type="submit" value="OK">
</form>
where :
<form method="post"> launches the method termed "post" that allows to send data to be displayed or not at the phone display screen;
<action="myServlet"> designates the application that processes the data, namely the payment application integrated within the SCWS;
<input type="password" name="pin" maxlength="20" value=""> defines a hollow box in which the entered data will appear in an unclear manner, like with a substituting star or any other character for each entered data, as the PIN, whose maximum length is for example 20;
<input type="hidden" name="rnd" value="XYZ"> defines the random intended not to be displayed (hidden), whose value consist of three characters, namely "XYZ";
<input type="submit" value="OK"> defines a button for validating entered data, as PIN; and
</form> indicates a mark for the end of the considered form.

Once the servlet has generated the form and the card has generated a new random that is intended not to be displayed, the servlet of the card 14 sends to the phone browser 44 a message 48 conveying a resulting HTML page containing the generated random and a request for entering data, as PIN.

After having received the resulting HTML page, the phone browser 44 sends a message 410 conveying the resulting HTML page to the phone display screen 112, in order to display a message for entering a user PIN while hiding the associated random.

A user sees, at the phone display screen 112, the message that prompts her or him to give the PIN associated with the card 14 and that is known to the card 14. Nevertheless, the user does not see the associated random that is not displayed and enters, thanks to the phone man machine interface, data, as her or his PIN.

Once the data has been entered, as her or his PIN, and the user is rather confident about its proposal, the user confirms her or his choice, for example by actuating a phone button termed "submit".

Once the user has confirmed her or his choice, then the phone display screen 112 sends to the phone browser 44 a message 412 conveying the resulting validated HTML page that includes the entered data and the associated random.

The phone browser 44 sends to the card 14, such as a "POST", a message 414 conveying the resulting validated HTML page that includes the entered data and the associated random.

The two messages 48 and 414 exchanged between the card and the phone use STK commands by using APDU that encapsulate the resulting HTML page and the resulting validated HTML page. The APDU can be encapsulated within a Bearer Independent Protocol (or BIP).

According to another embodiment, instead of APDU, a Transmission Control Protocol (or TCP/IP) is used, as the Internet protocol between the SCWS, as web server, and the phone browser 44, as client.

Then, the card 14 receives the message 414, as response to the message 48 as the corresponding request, the servlet is actuated and verifies whether the random exists and is the right one, namely the last generated one, and whether the entered data is the expected PIN.

After the servlet has verified the random and the PIN while comparing them respectively with the random lastly generated and the expected PIN, according to the comparison results, the card 14 sends to the electronic payment terminal 114 a message 416 for authorizing or forbidding the payment transaction.

Then, the card 14 invalidates the random by erasing it by replacing it by a new generated random.

Such an invalidation operation ensures that the random has been used only once.

While one and the same PIN is required for performing two payment transactions, two different random numbers are required without the user knowing.

Consequently, it is not possible to re-play the last validated user authentication.

## Claims

1. A method (30) for securing an operation, the method comprising :
- a displaying step in which a terminal displays (38) a message for entering data,
- a first comparing step in which a token compares (318) entered data with secret data,
**characterized in that** the method further comprises :
- a marking step by which the token associates a first sequence mark with data for displaying the message for entering data;
- a cooperating step in which:
- the token sends (36) to the terminal the data for displaying the message for entering data accompanied with the first sequence mark,
- the terminal sends (312) to the token entered data accompanied with a second sequence mark,
- a second comparing step, the token compares (314) the second sequence mark with the first sequence mark, and
- according to comparison results, the token authorizes (320) or forbids (316) to carry out the operation.

2. Method according to claim 1, wherein the token and the terminal implement a HyperText Markup Language for the cooperating step.

3. Method according to claim 1 or 2, wherein the token and/or the terminal carry out the operation.

4. Method according to any of claims 1 to 3, wherein the method comprises a sequence mark storing step in which the token stores at least one first sequence mark before the cooperating step.

5. Method according to any of claims 1 to 4, wherein the method comprises a sequence mark generating step in which the token generates (34) at least one first sequence mark before the cooperating step.

6. Method according to any of claims 1 to 5, wherein, after the second comparing step, the token erases the first sequence mark.

7. Method according to any of claims 1 to 6, wherein the method comprises a browsing step from one displayed data page for entering data to at least another displayed data page for requesting to carry out the operation.

8. Method according to any of claims 1 to 7, wherein the token encrypts the first sequence mark.

9. Method according to any of claims 1 to 8, wherein the first sequence mark includes a predetermined random number.

10. Method according to any of claims 1 to 9, wherein the token requests to include the first sequence mark within a hidden part of a displayed data page.

11. Method according to any of claims 1 to 10, wherein the token and the terminal implement a Bearer Independent Protocol for the cooperating step.

12. A use of the method according to any of claims 1 to 11 within an application comprising at least one operation requiring a previous user authentication.

13. A token (14) for securing an operation, the token being intended to cooperate with at least one external entity, the token comprising means for comparing entered data with secret data,
**characterized in that** the token comprises:
- means (22, 24) for associating a first sequence mark with data for displaying a message for entering data;
- means (26) for sending to outside the data for displaying the message for entering data accompanied with the first sequence mark;
- means (26) for receiving entered data accompanied with a second sequence mark;
- means (22, 24) for comparing the second sequence mark with the first sequence mark; and
- means (22, 26) for authorizing or forbidding, according to comparison results, to carry out the operation.

14. A system (10) for securing an operation, the system comprising a terminal (12) and a token (14) coupled with the terminal, the terminal comprising a display screen (112) for displaying a message for entering data, the token comprising means for comparing entered data with secret data,
**characterized in that** the token comprises:
- means (22, 24) for associating a first sequence mark with data for displaying the message for entering data;
- means (26) for sending to the terminal the data for displaying the message for entering data accompanied with the first sequence mark,
**in that** the terminal comprises means for sending to the token entered data accompanied with a second sequence mark,
and **in that** the token comprises:
- means (22, 24) for comparing the second sequence mark with the first sequence mark, and
- means (22, 26) for authorizing or forbidding, according to comparison results, to carry out the operation.

15. System according to claim 14, wherein the terminal includes a mobile phone (12) and the token includes a smart card (14) embedding at least one application comprising the operation.
